# EUROPÄISCHE PATENTANMELDUNG

(11) **EP 3 366 918 A1**
(43) Veröffentlichungstag der Anmeldung: **29.08.2018**
(21) Anmeldenummer: 17158169.7
(22) Anmeldetag: 27.02.2017
(51) Int. Cl.: F03D 80/70, F16N 31/00, F16C 33/66

(54) **VORRICHTUNG ZUM AUFFANGEN VON VERBRAUCHTEM SCHMIERMITTEL**

(71) Anmelder: Nordex Energy GmbH, 22419 Hamburg (DE)
(72) Erfinder: Radou, Frederic, 25486 Alveslohe (DE)
(74) Vertreter: Garrels, Sabine

(57) **Zusammenfassung**

Die Erfindung betrifft eine Vorrichtung zum Auffangen von verbrauchtem Schmiermittel (3), welche aus einem zylindrischen, hohlen Behälter(1) besteht. Der Behälter(1) ist einseitig geschlossen und über einen Stutzen (12) mit einem mit Schmiermittel(3) gefüllten Lager (4) verbunden. Der Einsatz solcher Behälter(1) für verbrauchtes Schmiermittel(3) kann beispielsweise an Lagern in Windenergieanlagen erfolgen. Aufgabe der Erfindung ist es, eine Vorrichtung zum Auffangen von verbrauchtem Schmiermittel (3) zu entwickeln, welche eine einfache Handhabung ermöglicht. Durch das Verbleiben der Vorrichtung am Lager (4) soll vor allem im Bereich der Wartung der Einsatz von Verbrauchs- und Ersatzmaterialien minimiert werden.Die erfindungsgemäße Vorrichtung besteht aus einem hohlen, zylindrischen Behälter(1), welcher einseitig geschlossen ist und über einen Stutzen (12) mit einem mit Schmiermittel(3) gefüllten Lager (4) verbunden ist. In dem Behälter(1) sind Mittel angeordnet, welche ein Entfernen des verbrauchten Schmiermittels aus dem Behälter(1) ermöglichen, ohne den Behälter(1) selbst vom Lager (4) zu entfernen.

## Beschreibung

Die Erfindung betrifft eine Vorrichtung zum Auffangen von verbrauchtem Schmiermittel, welche aus einem zylindrischen, hohlen Behälter besteht. Der Behälter ist einseitig geschlossen und über einen Stutzen mit einem mit Schmiermittel gefüllten Lager verbunden. Der Einsatz solcher Behälter für verbrauchtes Schmiermittel kann beispielsweise an Lagern in Windenergieanlagen erfolgen.

Für ein reibungsarmes Arbeiten von Lagern, befinden sich in diesen Schmierstoffe, welche nach Gebrauch als Altfett entfernt werden müssen. In Schmiersystemen, welche beispielsweise für Lageranordnungen in Windenergieanlagen zur Anwendung kommen, tritt das Altfett regelmäßig und an definierten Stellen aus den Lagern aus. Das Auffangen von austretendem Altfett erfolgt in der Regel in kleinen Behältern, welche mit dem Auslass des Lagers dicht verbunden sind. Die Behälter sind häufig Kunststoffflaschen aus einem weichen PE-Material, welche entfernt werden können, um sie zu entleeren oder zu entsorgen. Sobald die Behälter einen Füllgrad von ca. 40% erreicht haben, sollten diese ausgewechselt werden. Das Fett ist manuell mit wirtschaftlich vertretbarem Aufwand nicht aus den Behältern zu entfernen. Daher werden die teil- oder voll-gefüllten Behälter entsorgt. Dadurch müssen regelmäßig neue, leere Behälter beschafft werden. Die Entsorgung der gefüllten Behälter ist teurer als die Entsorgung des Altfettes allein, da die Entsorgung der teil- oder vollgefüllten Behälter als Sondermüll zusätzliche Kosten verursacht.

Im Stand der Technik beispielsweise werden Altfettbehälter genutzt, die mit einem Deckel ausgerüstet sind, der über eine Winkelverschraubung fest mit der Anlagenstruktur verbunden ist. Der eigentliche Behälter wird an dem fixierten Deckel angeschraubt. Die Behälter werden durch eine kurze Leitung, die vom Behälterboden (Flaschenboden) bis zur Mitte des Behälters reicht, belüftet. Bei eintretendem Fett kann die verdrängte Luft über die Belüftung entweichen.

In der Veröffentlichungsschrift EP 2447485 A1 ist ein Sammelbehälter für Schmierstoff mit einer Kartusche offenbart, die eine Einlassöffnung zum Einbringen von Schmierstoff und eine Entlüftungsöffnung aufweist. Ein Dichtungselement in der Kartusche ist bewegbar angeordnet und trennt die Fluidverbindung zwischen der Einlassöffnung und der Entlüftungsöffnung. Für eine Entleerung muss der Sammelbehälter entfernt werden.

Die Lösung aus EP 2425132 B1 befasst sich mit einem Kanister zum Auffangen von Fett aus einem Lager, wobei der Auslass des Lagers mit dem Einlass des Kanisters über eine lösbare Schnappverbindung verbunden ist. Der Kanister umfasst einen lösbaren Verschluss, in dem eine Belüftungsstruktur in Form einer Öffnung und einer Röhre angeordnet ist. Die Belüftungsstruktur ermöglicht ein Freisetzen von Luft aus dem Innenraum des Kanisters.

### Darstellung der Erfindung

Aufgabe der Erfindung ist es, eine Vorrichtung zum Auffangen von verbrauchtem Schmiermittel zu entwickeln, welche eine einfache Handhabung ermöglicht. Durch das Verbleiben der Vorrichtung am Lager soll vor allem im Bereich der Wartung der Einsatz von Verbrauchs- und Ersatzmaterialien minimiert werden.

Die Aufgabe wird durch die in den Ansprüchen offenbarten technischen Merkmale gelöst.

Die erfindungsgemäße Vorrichtung zum Auffangen von verbrauchtem Schmiermittel besteht aus einem hohlen, zylindrischen Behälter, welcher einseitig geschlossen ist und über einen Stutzen mit einem mit Schmiermittel gefüllten Lager verbunden ist. In dem Behälter sind Mittel angeordnet, welche ein Entfernen des verbrauchten Schmiermittels aus dem Behälter ermöglichen, ohne den Behälter selbst vom Lager zu entfernen.

Die Mittel zum Entfernen des verbrauchten Schmiermittels bestehen aus einem Kolben mit einer Kolbenplatte und einer Kolbenstange. Die scheibenförmige Kolbenplatte ist an einem Ende der Kolbenstange angeordnet, welches zur geschlossenen Seite des Behälters weist. Die Kolbenplatte ist in diesem Ausführungsbeispiel scheibenförmig. An einer der Kolbenplatte gegenüber liegenden Seite ist ein, den Behälter abdichtender Verschluss mit der Kolbenstange fest verbunden.

Auf einer Längsachse des Behälters ist der Stutzen mit einem Schmiermitteleinlass in den Behälter angeordnet. Die Kolbenstange ist hohl und über mindestens zwei Bleche mit einem ringförmigen Ableitzylinder verbunden. Der Ableitzylinder ist unmittelbar unterhalb des Schmiermitteleinlasses vom Stutzen in den Behälter angeordnet.

Die Kolbenstange ist mit mindestens einer Lufteintrittsöffnung versehen, welche in einem Bereich unmittelbar unterhalb des Ableitzylinders angeordnet ist. In dem Verschluss mündet eine Luftaustrittsöffnung der Kolbenstange. Dadurch ist es möglich, dass die verdrängte Luft aus dem Behälter nach außen entweichen kann.

Vorteile der Erfindung bestehen darin, dass Kosten eingespart werden, da keine Ersatzbehälter mehr erforderlich sind. Durch die Erfindung wird die wirtschaftliche Trennung des Fettes von den Behältern umsetzbar. Beschaffung und Logistik von Verbrauchsmaterial in Form von neuen Behältern fallen bei der Wartung weg. Es sind Einsparungen bei der Entsorgung zu erwarten, da nur Altfett entsorgt werden muss. Außerdem fallen keine Kosten für die Entsorgung von Behältern an, da diese an dem Lager verbleiben.

### Ausführung der Erfindung

Die Erfindung wird anhand eines Ausführungsbeispiels erläutert. Hierzu zeigen:
- Figur 1: die erfindungsgemäße Vorrichtung in einer Schnittzeichnung,
- Figur 2: ein in die Vorrichtung integriertes Bauteil zur Belüftung und Entleerung und
- Figur 3: ein Ausschnitt Z aus Figur 2.

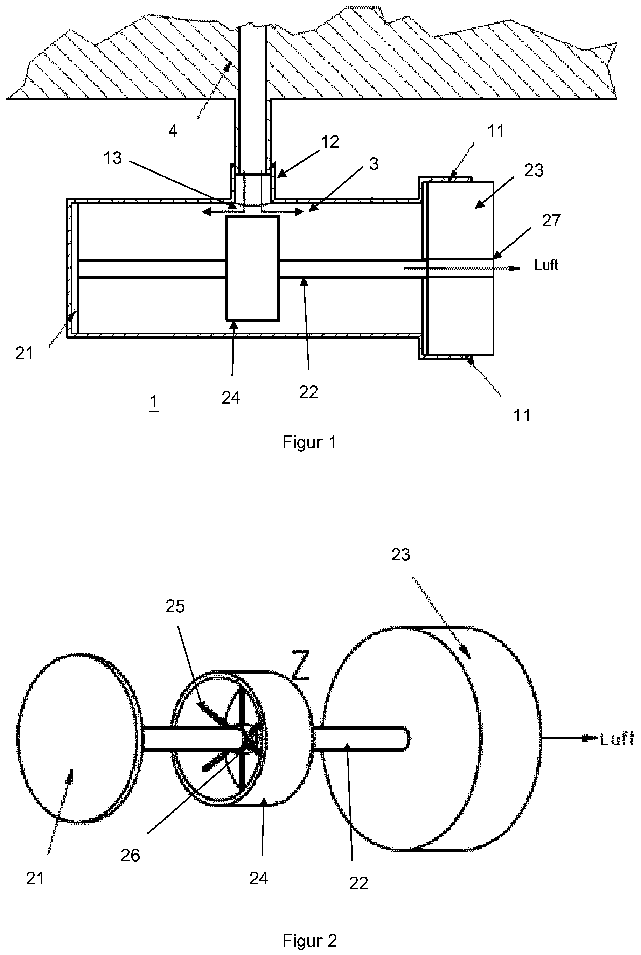

Die in Figur 1 gezeigte erfindungsgemäße Vorrichtung zum Auffangen von verbrauchtem Schmiermittel besteht aus einem hohlen, zylindrischen Behälter 1, welcher einseitig geschlossen ist. Der Behälter 1 besteht aus einem trittfesten Material, beispielsweise aus Kunststoff. Die offene Seite des Behälters 1 weist in diesem Ausführungsbeispiel einen umlaufenden Ring 11 mit einem etwas größeren Durchmesser als den des Behälters 1 auf, wodurch ein nach außen gerichteter Absatz entsteht. Der Ring 11 ist beispielsweise mit einem Innengewinde versehen. Es ist auch möglich, dass das Innengewinde direkt in den Behälter eingebracht ist. An dem Behälter 1 ist auf der Längsachse zwischen der offenen und der geschlossenen Seite ein nach außen liegender Stutzen 12 fest mit dem Behälter 1 verbunden. Der Stutzen 12 ist mit einem großen Innendurchmesser versehen und stellt eine Verbindung zwischen einem mit Schmiermittel 3 gefüllten Lager 4 und einem Schmiermitteleinlass 13 des Behälters 1 her und ist für den Anschluss an das Lager 4 beispielsweise mit einer Rastverbindung versehen. Über den Stutzen 12 gelangt das Schmiermittel 3 direkt in den Behälter 1.

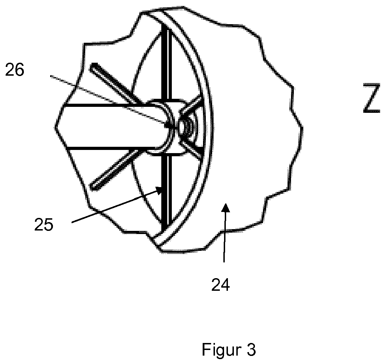

In dem Behälter 1 ist ein axialer Kolben 2 mit einer Kolbenplatte 21 und einer hohlen Kolbenstange 22 angeordnet. Die Kolbenplatte 21 ist beispielsweise scheibenförmig und befindet sich an dem Ende der Kolbenstange 22, welches zur geschlossenen Seite des Behälters 1 weist. Die Kolbenplatte 21 hat einen Durchmesser, welcher dem Innendurchmesser des Behälters 1 in der Weise entspricht, dass der Kolben 2 mit einem geringen Spiel im Behälter 1 vor und zurück bewegt werden kann. Die Kolbenstange 22 ist an dem der Kolbenplatte 21 gegenüberliegenden Ende mit einem dichtenden Verschluss 23, z.B. einem Schraubverschluss, verbunden. Der Verschluss 23 mit einem Außengewinde ist auf der Kolbenstange 22 fest angeordnet und korrespondiert mit dem Innengewinde des Rings 11 oder des Behälters 1 an der offenen Stirnfläche des Behälters 1. Die hohle Kolbenstange 22 ist mit einem ringförmigen Ableitzylinder 24 verbunden, wobei der Ableitzylinder 24 durch Speichen 25 oder mindestens zwei Bleche an seiner Position gehalten wird (siehe Figur 2 und 3). Der Ableitzylinder 24 ist auf der Kolbenstange 22 unmittelbar unterhalb des Schmiermitteleinlasses 13 angeordnet und ist so dimensioniert, dass das Schmiermittel 3 ungehindert in den Behälter einfließen kann. Eintretendes Schmiermittel 3 wird durch den Ableitzylinder 24 an die Innenseite des Behälters 1 geleitet. Dort sammelt es sich durch sein natürliches Haftverhalten an den Wandungen des Behälters 1. Im zentralen Innenbereich des Behälters 1 bleibt ein Luftvolumen erhalten. Der Ableitzylinder 24 schützt auch eine Lufteintrittsöffnung 26 aus dem Behälter 1 in die Kolbenstange 22 (siehe Figur 3, welche einen Ausschnitt Z aus Figur 2 darstellt). Die Lufteintrittsöffnung 26 befindet sich in der Kolbenstange 22 in einem Bereich unmittelbar unterhalb des Ableitzylinders 24. Die Kolbenstange 22 ist an einem Ende durch die Kolbenplatte 21 verschlossen und mündet an ihrem anderen Ende in dem ist auf der Längsachse zwischen der offenen und der geschlossenen Seite ein nach außen liegender Stutzen 12 fest mit dem Behälter 1 verbunden Verschluss 23, welcher eine Luftaustrittsöffnung 27 aufweist. Die Belüftung des Behälters 1 erfolgt somit über die hohle Kolbenstange 22. Dadurch wird gewährleistet, dass bei einfließendem Schmiermittel 3 die verdrängte Luft durch die Kolbenstange 22 und den Verschluss 23 nach außen entweichen kann.

Durch die erfindungsgemäße Vorrichtung kann ein Entfernen von verbrauchtem Schmiermittel 3 aus dem Behälter 1 direkt vor Ort vorgenommen werden. Dazu wird der Verschluss 23 gelöst und der Kolben 2 aus dem Behälter 1 gezogen. Das verbrauchte Schmiermittel 3, welches sich im Behälter 1 befindet, wird durch die Kolbenplatte 21 herausgezogen und kann mit einem passenden Behältnis aufgefangen werden. Dazu ist es nicht notwendig, dass der Kolben 2 vollständig aus dem Behälter 1 entfernt wird. Anschließend wird der Kolben 2 wieder zurück geschoben und der Verschluss 23 verschlossen. Der Behälter 1 ist für den Zeitraum bis zur nächsten Wartung wieder vollständig einsetzbar und muss nicht, wie beim Stand der Technik üblich, entfernt werden.

Da es sich bei der vorhergehenden, detailliert beschriebenen Vorrichtung zum Auffangen von verbrauchtem Schmiermittel um ein Ausführungsbeispiel handelt, kann sie in üblicher Weise vom Fachmann in einem weiten Umfang modifiziert werden, ohne den Bereich der Erfindung zu verlassen. Insbesondere können auch die konkreten Ausgestaltungen des Behälters 1 in anderer Form als in der hier beschriebenen folgen. So können beispielsweise andere bereits bekannte Verschlussmöglichkeiten, wie beispielsweise ein Bajonettverschluss, am Behälter 1 vorgesehen sein. Ebenso kann der Kolben 2 in einer anderen Form ausgestaltet werden, wenn dies aus Platzgründen bzw. designerischen Gründen notwendig ist. Weiter schließt die Verwendung der unbestimmten Artikel "ein" bzw. "eine" nicht aus, dass die betreffenden Merkmale auch mehrfach vorhanden sein können.

### Bezugszeichen

- 1: Behälter
11 umlaufender Ring am Behälter 1
12 Stutzen am Behälter 1
13 Schmiermitteleinlass
- 2: Kolben
21 Kolbenplatte
22 Kolbenstange
23 Verschluss
24 ringförmiger Ableitzylinder
25 Speichen
26 Lufteintrittsöffnung
27 Luftaustrittsöffnung
- 3: Schmiermittel
- 4: Lager

## Patentansprüche

1. Vorrichtung zum Auffangen von verbrauchtem Schmiermittel bestehend aus einem hohlen, zylindrischen Behälter (1), welcher einseitig geschlossen ist und über einen Stutzen (12) mit einem mit Schmiermittel (3) gefüllten Lager (4) verbunden ist, **dadurch gekennzeichnet, dass**
in dem Behälter (1) Mittel angeordnet sind, welche ein Entfernen des verbrauchten Schmiermittels (3) aus dem Behälter (1) ermöglichen, ohne den Behälter (1) selbst vom Lager (4) zu entfernen.

2. Vorrichtung nach Anspruch 1 **dadurch gekennzeichnet, dass** die Mittel zum Entfernen des verbrauchten Schmiermittels (3) aus einem Kolben (2) mit einer Kolbenplatte (21) und einer Kolbenstange (22) bestehen, wobei die Kolbenplatte (21) an einem Ende der Kolbenstange (22) angeordnet ist, welches zur geschlossenen Seite des Behälters (1) weist, und dass an einer der Kolbenplatte (21) gegenüber liegenden Seite ein, den Behälter (1) abdichtender Verschluss (23) mit der Kolbenstange (22) fest verbunden ist.

3. Vorrichtung nach Anspruch 2 **dadurch gekennzeichnet, dass** die Kolbenstange (22) hohl ist und über Speichen (25) oder mindestens zwei Bleche mit einem ringförmigen Ableitzylinder (24) verbunden ist, wobei der Ableitzylinder (24) unmittelbar unterhalb eines Schmiermitteleinlasses (13) vom Stutzen (12) in den Behälter (1) angeordnet ist.

4. Vorrichtung nach Anspruch 3 **dadurch gekennzeichnet, dass** die Kolbenstange (22) mit mindestens einer Lufteintrittsöffnung (26) versehen ist, welche in einem Bereich unmittelbar unterhalb des Ableitzylinders (24) angeordnet ist.

5. Vorrichtung nach einem der Ansprüche 2 bis 4 **dadurch gekennzeichnet, dass** in dem Verschluss (23) eine Luftaustrittsöffnung (27) der Kolbenstange (22) mündet.

## Geänderte Patentansprüche

### Geänderte Patentansprüche gemäss Regel 137(2) EPÜ.

1. Vorrichtung zum Auffangen von verbrauchtem Schmiermittel bestehend aus einem hohlen, zylindrischen Behälter (1), welcher einseitig geschlossen ist und über einen Stutzen (12) mit einem mit Schmiermittel (3) gefüllten Lager (4) verbunden ist, wobei in dem Behälter (1) Mittel angeordnet sind, welche ein Entfernen des verbrauchten Schmiermittels (3) aus dem Behälter (1) ermöglichen, ohne den Behälter (1) selbst vom Lager (4) zu entfernen, wobei die Mittel zum Entfernen des verbrauchten Schmiermittels (3) aus einem Kolben (2) mit einer Kolbenplatte (21) und einer Kolbenstange (22) bestehen, wobei die Kolbenplatte (21) an einem Ende der Kolbenstange (22) angeordnet ist, welches zur geschlossenen Seite des Behälters (1) weist,
**dadurch gekennzeichnet, dass**
die Kolbenstange (22) hohl ist und über Speichen (25) oder mindestens zwei Bleche mit einem ringförmigen Ableitzylinder (24) verbunden ist, wobei der Ableitzylinder (24) unmittelbar unterhalb eines Schmiermitteleinlasses (13) vom Stutzen (12) in den Behälter (1) angeordnet ist und die Kolbenstange (22) mit mindestens einer Lufteintrittsöffnung (26) versehen ist, welche in einem Bereich unmittelbar unterhalb des Ableitzylinders (24) angeordnet ist.

2. Vorrichtung nach Anspruch 1 **dadurch gekennzeichnet, dass**
an einer der Kolbenplatte (21) gegenüber liegenden Seite ein, den Behälter (1) abdichtender Verschluss (23) mit der Kolbenstange (22) fest verbunden ist.

3. Vorrichtung nach Anspruch 2 **dadurch gekennzeichnet, dass**
in dem Verschluss (23) eine Luftaustrittsöffnung (27) der Kolbenstange (22) mündet.
